# EUROPEAN PATENT APPLICATION

(11) **EP 4 156 677 A1**
(43) Date of publication of application: **29.03.2023**
(21) Application number: 21809764.0
(22) Date of filing: 14.05.2021
(51) Int. Cl.: H04N 5/93, G06F 3/0484, H04N 21/431, H04N 21/433

(54) **MOVIE PLAYBACK DEVICE AND MOVIE PLAYBACK METHOD**

(30) Priority: 18.05.2020 JP 2020086921
(71) Applicant: Run.Edge Limited, Tokyo 151-0051 (JP)
(72) Inventor: OGUCHI, Atsushi, Tokyo 151-0051 (JP); SAKAGUCHI, Manabu, Tokyo 151-0051 (JP); KAWAKAMI, Yusei, Tokyo 151-0051 (JP); KUWABARA, Soma, Tokyo 151-0051 (JP); TATEIWA, Misako, Tokyo 151-0051 (JP)
(74) Representative: Angerhausen, Christoph
(86) International application number: PCT/JP2021/018441
(87) International publication number: WO 2021/235356

(57) **Abstract**

Provided are a video playback device and a video playback method which enable a user to readily search for a scene the user wants to watch and to readily adjust a playing position in a fine-tuned manner. The video playback device 2 includes a video playback unit 211 for enabling selective playback of first video data 56 or second video data 66 that are part of the first video data 56 on a display unit 25; a playback video selection unit 212 for allowing a user to select playback of the first or second video data 56, 66; and an operation section display control unit 213 to display on the display control unit 25 a first operation section 53 that indicates a playing position of the first video data 56 and allows specification of the playing position thereof when playback of the first video data 56 has been selected or a second operation section 63 that indicates a playing position of the second video data 66 and allows specification of the playing position thereof when playback of the second video data 66 has been selected; wherein the operation unit of the second operation section 63 is set shorter than the operation unit of the first operation section 53 in order to allow the playing position to be specified in a finely tuned manner.

## Description

### [Technical field]

The present invention relates to a video playback device and a video playback method.

### [Background art]

Heretofore, as a method for readily adjusting a playing position in a fine-tuned manner, patent document 1, for example, discloses holding down of a seek bar for displaying adjustment circles (circular GUI) for "second"-setting, "minute"-setting and "hour"-setting adjustments which allow easy adjustment of the playing position that is more fine-tuned as compared to when using a seek bar.

As an alternative method for readily adjusting a playing position in a fine-tuned manner, patent document 2, for example, discloses fast-forward and fast-rewinding playback processing of a video with a seek bar in a seek-bar mode, wherein a user moves a cursor onto a seek bar to click a mouse for displaying, on the upper part of the display, an enlarged operational region over which a user moves a playback pointer with, for example, mouse dragging for allowing playback to be resumed from any position by changing the playing position of a video in a more fine-tuned manner compared to the case in which a user moves a playback pointer on a seek bar.

### [Prior art documents]

### [Patent documents]

Patent document 1: WO2016/035369
Patent document 2: JP-A- 2014-107661

### [Summary of the invention]

### [Problems to be solved by the invention]

According to patent document 1, the processing for displaying a control circle is to be carried out when a seek bar is determined to be held down during the playback of a video, which, therefore, necessitates the seek bar to be used in the first place for specifying a playing position that corresponds to a desired scene to be watched in the video during playback. Since this seek bar is a seek bar for the whole contents of the video during playback, it is difficult to find a detailed playback position. That is, there is an issue that a desired playback position of the video cannot readily be found from the whole contents of the video.

According to patent document 2, a user moves a cursor onto a seek bar to click a mouse for displaying, on the upper part of the display in an operational region, an enlarged operational region, which therefore necessitates the seek bar, as an operational region, to be used in the first place for specifying a playback position that corresponds to a desired scene to be watched in the video during playback. Since this seek bar is a seek bar for the whole contents of the video during playback, it is difficult to find a detailed playback position. That is, there is again an issue that a desired playback position of the video cannot readily be found from the whole contents of the video.

The present invention has been made in view of these circumstances and provides a video playback device and video playback method for readily searching a scene in which a user wants to watch and adjusting a playback position in a fine-tuned manner.

### [Means to solve the problems]

In order to solve these problems, the present invention provides a video playback device including a video playback unit for enabling selective playback of first video data or second video data that are part of the first video data on a display unit, a playback video selection unit for allowing a user to select playback of the first or second video data, and an operation section display control unit to display on the display control unit a first operation section that indicates a playing position of the first video data and allows specification of the playing position thereof when playback of the first video data has been selected, or a second operation section that indicates a playing position of the second video data and allows specification of the playing position thereof when playback of the second video data has been selected, wherein a second duration of time between a playback start time and a playback end time of the second operation section is set shorter than a first duration of time between a playback start time and a playback end time of the first operation section, and a second operation unit that is set as a duration of time specified by a second physical length of the second operation section ranging from a reference time point of the second operation section to a time of the playing position of the second video data is set shorter than a first operation unit that is set as a duration of time specified by a first physical length of the first operation section ranging from a reference time point of the first operation section to a time of the playing position of the first video data in order to allow the playing position to be specified in a finely tuned manner, provided that the first physical length of the first operation section is identical to the second physical length of the second operation section.

In the above-described video playback device, thumbnails may be displayed on the display unit as a playback video selection unit for a user to select playback of the second video data.

The present invention further provides a video playback method including a playback video accepting step to provide a playback video selection unit for allowing a user to select playback of first video data or second video data that are part of the first video data, and then to accept a selection of the video data to be played back on a display unit, and an operation section displaying step to display on the display unit a first operation section that indicates a playing position of the first video data and allows specification of the playing position thereof when playback of the first video data has been selected, or a second operation section that indicates a playing position of the second video data and allows specification of the playing position thereof when playback of the second video data has been selected, wherein a second duration of time between a playback start time and a playback end time of the second operation section is set shorter than a first duration of time between a playback start time and a playback end time of the first operation section, and a second operation unit that is set as a duration of time specified by a second physical length of the second operation section ranging from a reference time point of the first operation section to a time of the playing position of the second video data is set shorter than a first operation unit that is set as a duration of time specified by a first physical length of the first operation section ranging from a reference time point of the first operation section to a time of the playing position of the first video data in order to allow the playing position to be specified in a finely tuned manner, provided that the first physical length of the first operation section is identical to the second physical length of the second operation section.

In the above-described video playback method, thumbnails may be displayed on the display unit as a playback video selection unit for a user to select playback of the second video data.

### [Effects of the invention]

The video playback device and the video playback method of the present invention enable a user to readily search for a scene the user wants to watch and to readily adjust a playing position in a fine-tuned manner, and the playback of the video can be resumed from a predetermined playing position that has been specified to thereby allow the user to seamlessly watch the video from a scene the user wants to watch.

### [Brief description of the drawings]

[FIG. 1] is a block diagram illustrating a whole scheme of a preferred embodiment of a video playback system incorporating a video playback device of the present invention.
[FIG. 2] is a schematic diagram illustrating how the whole video contents is playing back on a display screen that was displayed via a display unit by means of the video playback device according to a preferred embodiment of the present invention.
[FIG. 3] is a schematic diagram illustrating how partial video contents (second video data) or part of the whole video contents is playing back in a display screen that was displayed via a display unit by means of the video playback device according to a preferred embodiment of the present invention.
[FIG. 4] is a flow diagram illustrating a processing flow of the video playback method according to a preferred embodiment of the present invention.

### [Mode for carrying out the invention]

Based on drawings, described hereunder are preferred embodiments of a video playback device and video playback method according to the present invention.

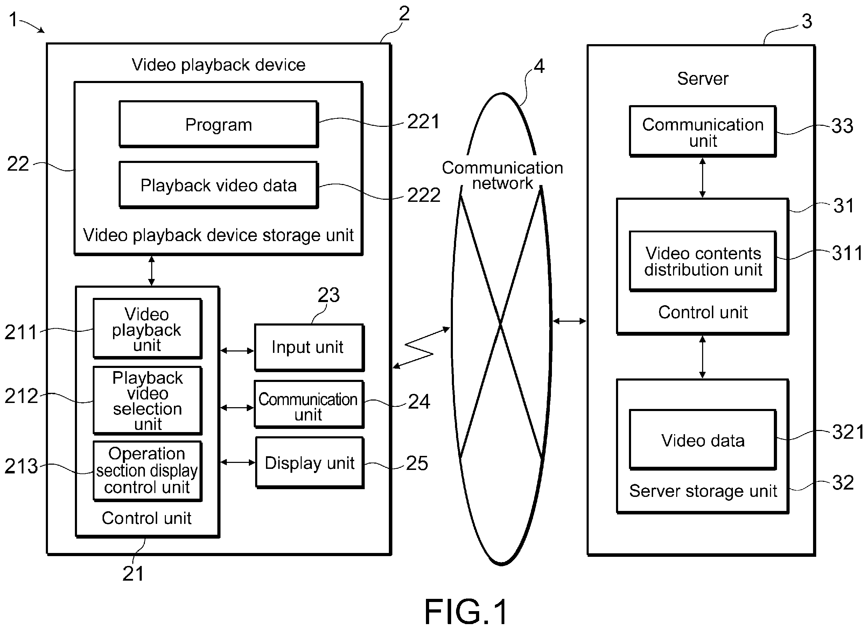

FIG. 1 is a block diagram illustrating a whole scheme of a video playback system 1 incorporating a video playback device 2 according to a preferred embodiment.

The elements for embodying the video playback system 1 of the present embodiment include a video playback device 2, a server 3 and a communication network 4. While there is shown only one video playback device 2 in the figure, there may be employed multiple video playback devices 2. This video playback system 1 as shown employs a configuration for live streaming video data 321 in the server 3 with, for example, the video playback device 2. Alternatively, the video playback device 2 may play the playback video data 222 that are stored in a storage unit 22 of the video playback device, or play the video data stored in storage media such as DVDs (not shown).

The video playback device 2 of this embodiment includes, as major components, a control unit 21, the video playback device-storage unit 22, an input unit 23, a communication unit 24, and a display unit 25. The control unit 21 includes various unit for playing, in a manner to be described in detail, video data 321 stored in a server storage unit 32 of a server 3 and/or playback video data 222 stored in the video playback device-storage unit 22. In some cases, the display unit 25 may be provided in the area outside of the video playback device 2.

The video playback device-storage unit 22 contains a program 221 stored therein by, for example, installation. The video playback device-storage unit 22 also downloads video data 321 stored in the server storage unit 32 and/or stores playback video data 222 that have been imported via an interface (not shown) of the video playback device-storage unit 22.

The control unit 21 includes a video playback unit 211, a playback video selection unit 212 and an operation section display control unit 213. The control unit 21 reads out the program 221 from the video playback device-storage unit 22, and the program 221 has the control unit 21, serving as a computer, carry out the operations of the video playback unit 211, the playback video selection unit 212 and the operation section display control unit 213.

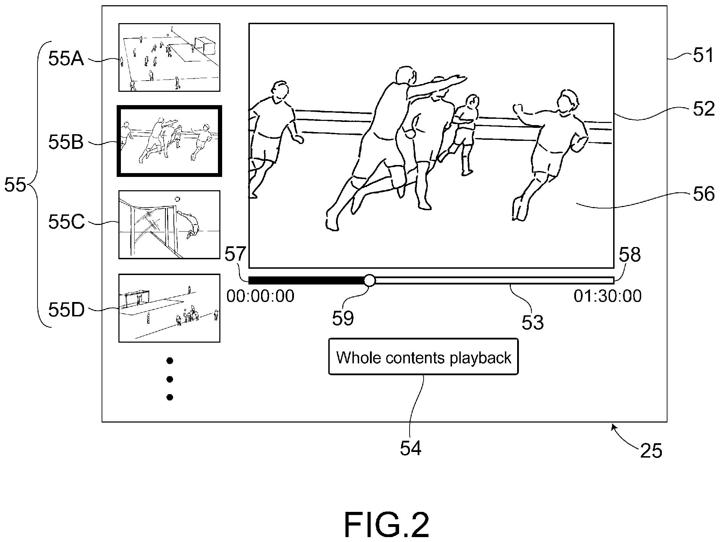

The input unit 23 is for accepting inputs from a user through thumbnails 55 (See FIG. 2) that serve as a playback video selection unit 212, and communicates to the control unit 21 an event that a thumbnail 55 has been pushed by a user, for example. The input unit 23 collaborate with thumbnails 55 displayed, for example, on a touch panel screen. Once a user performs operation such as tapping on a touch panel screen, then the control unit 21 reads out a program 221 to perform input instruction for having the control unit 21 carry out its functionality corresponding to that operation. For example, in the case as shown in FIG. 2 where a user has pushed a thumbnail 55A out of a plurality of the thumbnails 55 (55A,55B,55C,55D,...) that are displayed on the display screen 51 of the display unit 25, the event that this thumbnails 55A has been pushed will be transmitted to the control unit 21 by the input unit 23, and the control unit 21 will then, under the command of the program 221, make the video playback unit 211 recognize that this thumbnail 55A has been selected.

The control unit 21 enables communication with the server 3 via the communication network 4 by controlling the communication unit 24.

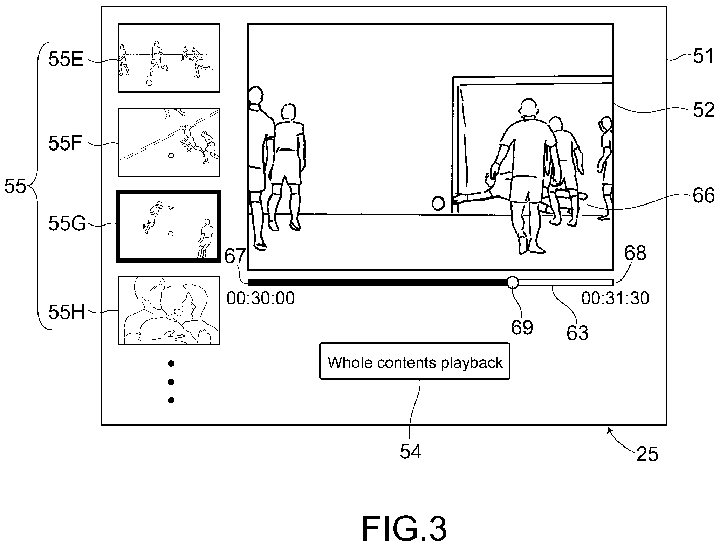

By controlling the display unit 25, the control unit 21 displays, for example, an application screen image and/or software screen image, generated by the program 221, on a display screen 51 of the display unit 25 (see FIGs. 2 and 3). Due to the instructions of the program 221, there will be displayed, on the display screen 51, a video playback screen image 52 playing the video data 321 or playback video data 222, first and second operation sections 53 and 63 for adjusting the playing position, and/or thumbnails 66 for partial video contents (second video data) 66 that are parts of the whole video contents (first video data) 56, for example. The display unit 25 and the input unit 23 compose the touch panel screen as explained above, and the input unit 23, made of a transparent electrode, is arranged on the display screen 51 of the display unit 25. The touch panel screen is configured in such a manner that once a touching operation has been carried out via the input unit 23 on, for example, the thumbnails 55 displayed on the display unit 25, an operation signal corresponding thereto will be sent from the input unit 23 to the control unit 21. It is to be noted that video data 321 and playback video data 222 contain the first video data 56 and the second video data 66, respectively.

The video playback unit 211 contained in the control unit 21 may selectively play back, on the display unit 25, the first video data 56 or the second video data 66 that are part of the first video data 56. For example, the first video data 56 may be, although not limited to the followings, a video of a whole 90-minute soccer match, and the second video data 66 may be a multiple of divided videos made by dividing the first video data 56 for every 90 seconds. It may be configured that a user pushes any one of the thumbnails 55A, 55B, 55C and 55D arranged on the left side in the display screen 51 in the playback time ordering from the top in order to make the video playback unit 221 play the second video data 66 for the corresponding thumbnail 55A,55B,55C or 55D on the video playback screen image 52.

The playback video selection unit 212 of the control unit 21 is for allowing a user to select playback of the first video data 56 or the second video data 66. As an exemplified way for allowing the user to select the playback of the first video data 56, it may be configured that a whole contents playback button as shown in FIG. 2, is displayed on the display screen 51. If an event that a user has pushed the whole contents playback button 54 is communicated from the input unit 23 to the control unit 21, then the video playback unit 221 carries out playback of the first video data 56 on the video playback screen image 52 even during the playback of the second video data 66. In this case, the playback of the first video data 56 may be resumed from the playing position at which the second video data 66 were being played, thus allowing a user to seamlessly watch the video. As an exemplified means for allowing the user to select playback of the second video data 66, the above-mentioned thumbnails 55 may be displayed on the display screen 51 of the display unit 25.

The operation section display control unit 213 of the control unit 21 may display, on the display screen 51 of the display unit 25, a first operation section 53 that indicates a playing position of the first video data 56 and allows specification of the playing position of the first video data 56 to be specified when playback of the first video data 56 has been selected by the playback video selection unit 212, while the operation section display control unit 213 may also display, on the display screen 51 of the display unit 25, a second operation section 63 that indicates a playing position of the second video data 66 and allows specification of the playing position of the second video data 66 to be specified when playback of the second video data 66 has been selected by the playback video selection unit 212. The first operation section 53 and the second operation section 63 have configurations and functionalities that will be described in the followings.

The video playback device 2 includes the communication unit 24 and is a device capable of activating an application and/or software by the execution of the program 221; for example, there may be employed a mobile information terminal device such as a smartphone, a tablet terminal and a mobile computer, or a personal computer such as a desktop computer.

In this embodiment, the server 3 is a component for making the video playback device 2 stream a video, and includes, as its main component elements, a control unit 31, a server storage unit 32 and a communication unit 33. The control unit 31 includes a video contents distribution unit 311 for distributing video data 321, stored in the server storage unit 32, upon request from the video playback device 2 to the video playback device 2 that has made such request. The control unit 31 enables communication with the video playback device 2 via the communication network 4 by controlling the communication unit 33. The communication unit 33 is basically utilized for receiving a request for video distribution from the video playback device 2 or for sending the video data 321 to the video playback device 2 in this embodiment.

The hardware configuration of the server 3 is a so-called general configuration where the control unit 31 as a computer has a processor such as a central processing unit (CPU), and executes a program (not shown) stored in the server storage unit 32 as a storage device (memory) such as a ROM (Read Only Memory) and/or a hard disk. The program makes the control unit 31, as a computer, execute video contents distribution unit 311.

The communication network 4 is a communication infrastructure such as the internet.

The playback configurations and functionalities of the video playback device 2 according to this embodiment will be described with reference to FIGs. 2 and 3.

FIG. 2 is a schematic diagram showing the whole video contents (first video data) 56 being played back on a display screen 51 that was displayed via a display unit 25 by means of the video playback device 2 according to a preferred embodiment of the present invention. FIG. 3 is a schematic diagram illustrating partial video contents (second video data) 66 that are part of the whole video contents are being played back on a display screen 51 that was displayed via a display unit 25 by means of the video playback device 2 according to a preferred embodiment of the present invention.

On the display screen 51 as shown in FIGs. 2 and 3, there are displayed the video playback screen images 52 for playing back and displaying the first and second video data 52, 66, the whole contents playback button 54 for selecting playback of the first video data 56, and a plurality of thumbnails 55 (55A,55B,55C,55D,55E,55F,55G,55H,...) for selecting playback of the second video data 66.

On the video playback screen image 52 in FIG. 2, there is played back and displayed the first video data 56 having a full duration of, for example, 90 minutes. On the left side of the video playback screen image 52 are arranged thumbnails 55A,55B,55C,55D,... of the second video data 66 in the playback order from the top. The second video data 66 are those made by dividing the first video data 56, and each of them may have a whole duration of, for example, 90 seconds.

FIG. 2 illustrates that a thumbnail 55B is encircled by a thick frame, and a video corresponding to a time range of the thumbnail 55B is playing back on the video playback screen image 52. The second video data 66 corresponding to the thumbnail 55B will be played back when a user pushes the thumbnail 55B, but in the case where the user wishes to adjust a playing position of the first video data 56 in a more fine-tuned manner around the current playing position, the thumbnail 55B corresponding to the currently playing video may be represented by a frame that is thicker than those of the other thumbnails 55A,55C,55D, ... to thereby highlight the thumbnail 55B for readily switching the scene of the first video data 56 at which the video is currently playing to the scene of the second video data 66. The thumbnails 55 may be still images or videos representing at least a set of several frames for allowing easy recognition of a scene of the video. Further, in order to allow a thumbnail 55, corresponding to a video now playing, to be visually recognized by a user, the playback video selection unit 212 may alternatively display another type of highlight on the display unit 25 as an alternative to the thick frame.

In the case where a thumbnail 55 is pushed by a user, the second video data 66 may be played back from the start position of the second video data 66 or from a playing position of the second video data 66 corresponding to the playing position of the first video data 56 at which the video has been playing. In the latter case, the user may seamlessly recognize a video, which therefore allows he/her to readily search for a desired scene.

FIG. 2 illustrates, below the video playback screen image 52, a first operation section 53 for enabling a playing position of the first video data 56 to be displayed and specified when playback of the first video data 56 has been selected. The first operation section 53 is a so-called seek bar and has the shape of a horizontally elongated bar in this embodiment. The left end 57 of the first operation section 53 corresponds to the beginning of the initial frame of the first video data 56 while the right end 58 of the first operation section 53 corresponds to the terminal of the last frame of the first video data 56. In FIG. 2, the left end 57 of the first operation section 53 is a position corresponding to minute 0 for the first video data 56 while the right end 58 of the first operation section 53 is a position corresponding to minute 90 for the first video data 56.

The numeral 59 represents a slider 59 whose position indicates the playing position of the first video data 56. The first operation section 53 may be differently colored between a range extending from the left end 57 of the first operation section 53 to the slider 59 and a range extending from the slider 59 to the right end 58 of the first operation section 53 in order for a user to readily recognize the playing position. The user may, for example, touch any position on the first operation section 53 or move the slider 59 to any position on the first operation section 53 to allow it to be accepted at the control unit 21 via operational signals from the input unit 23 to thereby adjust the playing position of the first video data 56.

FIG. 3 illustrates that a thumbnail 55G is displayed with a thick frame when pushed by a user, and the second video data 66, corresponding to that thumbnail 55G, is being played back and displayed on the video playback screen image 52. The above-mentioned representation with a thick frame is for the highlighting, and the manner it is highlighted shall not be limited to this.

FIG. 3 illustrates, below the video playback screen image 52, a second operation section 63 for enabling a playing position of the second video data 66 to be displayed and specified when playback of the second video data 66 has been selected. The second operation section 53 is a so-called seek bar having a configuration similar to the first operation section 53, and has the shape of a horizontally elongated bar in this embodiment. The left end 67 of the second operation section 63 corresponds to the beginning of the initial frame of the second video data 66 while the right end 68 of the second operation section 63 corresponds to the terminal of the last frame of the second video data 66. In FIG. 3, the left end 67 of the second operation section 63 is a position corresponding to minute 0 for the second video data 66, which also corresponds to a position of 30 minutes and 0 seconds for the first video data 56. Further, the right end 68 of the second operation section 63 is a position corresponding to second 90 for the second video data 66, which also corresponds to a position of 31 minutes and 30 seconds for the first video data 56.

The numeral 69 represents a slider 69 whose position represents a playing position of the second video data 66. The second operation section 63 may be differently colored between a range extending from the left end 67 of the second operation section 63 to the slider 69 and a range extending from the slider 69 to the right end 68 of the first operation section 63 in order for a user to readily recognize the playing position. The user may, for example, touch any position on the second operation section 63 or move the slider 69 to any position on the second operation section 63 to allow it to be accepted at the control unit 21 via operational signals from the input unit 23 to thereby adjust the playing position of the second video data 66.

As a configuration to be achieved on the display screen 51 of the display unit 25 with the help of the operation section display control unit 213, it may be configured that a second duration of time between a playback start time and a playback end time of the second operation section is set shorter than a first duration of time between a playback start time and a playback end time of the first operation section. In this embodiment, the first duration of time is set as 90 minutes while the second duration of time is set as 90 seconds. It may also be configured that the second operation section 63 has an operation unit that is shorter than that of the first operation section 53; that is, provided that a first physical length of the first operation section 53 from, for example, a playback start time, as a reference point of the first operation section 53, to a time of the playing position of the first video data 56 is identical to a second physical length of the second operation section 63 from, for example, a playback start time, as a reference point of the second operation section 63, to a time of the playing position of the second video data 66 which is specified by an operation onto the second operation section 63,a second operation unit that is set as a duration of time specified by the second physical length of the second operation section 63 may be set shorter than a first operation unit that is set as a duration of time specified by the first physical length of the first operation section 53 in order to allow the playing position to be specified in a finely tuned manner. In this case, the minimal time unit for allowing the playback time of the second video data 66 to be adjusted by an operation onto the second operation section 63 is set shorter than the minimum time unit for allowing the playing position of the first video data 56 to be adjusted by an operation onto the first video data 56.

The operational unit as used herein refers to a duration of time that is specified by a predefined physical length of a seek bar. For example, according to this embodiment, in the case where a slider 59, indicating the time point of the playing position of the first video data 56, is positioned at a point away from the left end 57, representing the playback start time of the first operation section 53, by a length of one-tenth of the whole physical length of the first operation section 53, the duration of time specified by a first length being set from the left end 57 of the first operation section 53 to a position, away from the left end 57 by the length of one-tenth of the whole physical length of the first operation section 53, is 9 minutes. That is, the first control unit, defined by a duration of time specified by the first length being set by a length of one-tenth of the whole physical length of the first operation section 53, is 9 minutes.

Meanwhile, in the case where a slider 99, indicating the time point of the playing position of the second video data 66, is positioned at a point away from the left end 67, representing the playback start time of the second operation section 63, by a length of one-tenth of the whole physical length of the second operation section 63, the duration of time specified by a second length from the left end 67 of the second operation section 63 to a position, away from the left end by the length of one-tenth of the whole physical length of the second operation section 63, is 9 seconds. That is, the second control unit, defined by a duration of time specified by the second length being set by a length of one-tenth of the whole physical length of the second operation section 63, is 9 seconds.

Accordingly, if the first physical length of the first operation section 53 and the second physical length of the second operation section 63 are identical with each other, then in respect of the control unit specified by the identical physical length in terms of the length of time, the first control unit of the first operation section 53 is set shorter than the second control unit of the second operation section 63, which enables a user to operate the position in a shorter period of time by means of the second operation section 63 to thereby allows he/her to specify the playing position in a fine-tuned manner.

If a user has pushed the whole contents playback button 54 which is arranged, for example, below the second operation section 63, then the video playback unit 221 resumes playback of the first video data 56 on the display unit 25 from a position in the first video data 56 corresponding to the playing position of the second video data 66. A user, therefore, is allowed to seamlessly watch the video contents. In the event that the playback of the second video data 66 has been finished to the last frame, it may be configured that the playback of the first video data 56 on the display unit 25 may be resumed from a position of the first video data 56 corresponding to the playing position at which the playback of the second video data 66 has been finished. Alternatively, once the playback of the second video data 66 has been finished to the last frame, a subsequent second video data 66 may be played back in succession.

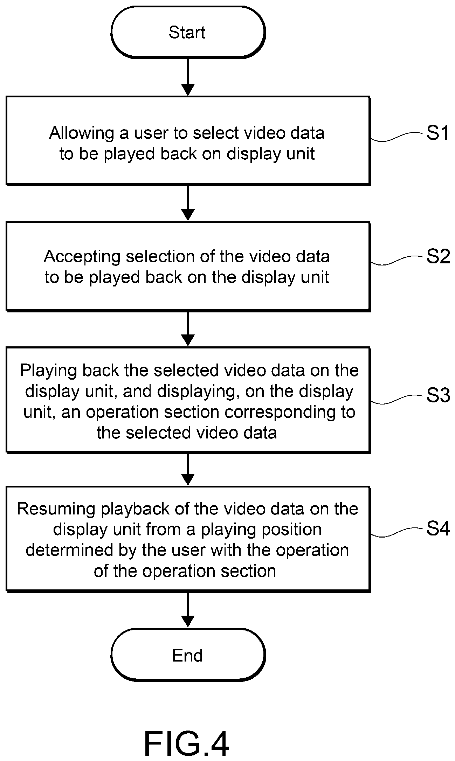

A processing flow of the video playback method to be carried out by the video playback device 2 according to the present embodiment will be explained hereunder with reference to FIG. 4 which illustrates a flow diagram indicating a preferred embodiment of the video playback method according to the present invention.

With reference to FIG. 4, as a first step, the control unit 21 of the video playback device 2 receives control signals from the input unit 23 to control the display unit 25 for allowing a user to select video data to be played back on the display unit 25 (step S1). The playback video selection unit 213 accepts the selection of the video data to be played back on the display unit 25 (Step S2). The video playback unit 211 then plays back the selected first video data 56 or second video data 66 on the display unit 25. The operation section display control unit 213 displays the first or second operation section 53, 63 on the display unit 25 based on the selected first video data 56 or second video data 66 (step S3). The starting position to resume the playback of the selected first video data 56 or second video data 66 may be determined such that the playback is seamlessly resumed from the playing position of the video before being switched. The video playback unit 211 resumes playback of the first or second video data 55, 66 on the display unit 25 from the playing position that has been determined by a user with the operation of the first operation section 53 or the second operation section 63 (Step S4).

As described above, the video playback device 2 of the present embodiment is a video playback device including a video playback unit 211 for enabling selective playback of first video data 56 or second video data 66 that are part of the first video data 56 on a display unit 25, a playback video selection unit 212 for allowing a user to select playback of the first or second video data 56, 66, and an operation section display control unit 213 to display on the display control unit a first operation section 53 that indicates a playing position of the first video data 56 and allows specification of the playing position thereof when playback of the first video data 56 has been selected, or a second operation section 63 that indicates a playing position of the second video data 66 and allows specification of the playing position thereof when playback of the second video data 66 has been selected, wherein a second duration of time between a playback start time and a playback end time of the second operation section 63 is set shorter than a first duration of time between a playback start time and a playback end time of the first operation section 53, and a second operation unit that is set as a duration of time specified by a second physical length of the second operation section 63 ranging from, for example, a playback start time, serving as a reference time point of the second operation section 63, to a time of the playing position of the second video data 66 that has been specified by an operation onto the second operation section 63 is set shorter than a first operation unit that is set as a duration of time specified by a first physical length of the first operation section 53 ranging from, for example, a playback start time, serving as a reference time point of the first operation section 53, to a time of the playing position of the first video data 56 in order to allow the playing position to be specified in a finely tuned manner, provided that the first physical length of the first operation section 53 is identical to the second physical length of the second operation section 63.

The video playback method of the present embodiment is a video playback method including: a playback video accepting step to provide a playback video selection unit for allowing a user to select playback of first video data or second video data that are part of the first video data, and then to accept a selection of the video data 56, 66 to be played back on a display unit 25, and an operation section displaying step to display on the display unit 25 a first operation section 53 that indicates a playing position of the first video data 56 and allows specification of the playing position thereof when playback of the first video data 56 has been selected, or a second operation section 63 that indicates a playing position of the second video data 66 and allows specification of the playing position thereof when playback of the second video data 66 has been selected, wherein a second duration of time between a playback start time and a playback end time of the second operation section 63 is set shorter than a first duration of time between a playback start time and a playback end time of the first operation section 53, and a second operation unit that is set as a duration of time specified by a second physical length of the second operation section 63 ranging from, for example, a playback start time, serving as a reference time point of the second operation section 63, to a time of the playing position of the second video data 66 that has been specified by an operation onto the second operation section 63 is set shorter than a first operation unit that is set as a duration of time specified by a first physical length of the first operation section 53 ranging from, for example, a playback start time, serving as a reference time point of the first operation section 53, to a time of the playing position of the first video data 56 in order to allow the playing position to be specified in a finely tuned manner, provided that the first physical length of the first operation section 53 is identical to the second physical length of the second operation section 63.

In these cases, a user may readily search for a scene the user wants to watch, and adjust a playing position in a finely tuned manner.

In the video playback device 2 of the present embodiment, thumbnails 55 are capable of being displayed on the display unit 25 as a playback video selection unit 212 for a user to select playback of the second video data 66.

In the video playback method of the present embodiment, thumbnails 55 are capable of being displayed on the display unit 25 as a playback video selection unit 212 for a user to select playback of the second video data 66.

In these cases, the thumbnails 55 enables a desired scene to be readily searched, and the playback of the video can be resumed from the specified playing position to thereby allow a user to finely adjust a playing position, thus allowing the video to be seamlessly watched from a scene the user wants to watch.

The present invention has heretofore been described based on the embodiment; the present invention can be exploited in various modified manners. For example, the example of the soccer video mentioned in the above embodiment is merely an example, and the present invention may be utilized for various other purposes. Further, the first operation section 53 and the second operation section 63 may have various shapes which are not limited to the horizontally elongated bars. Although the sliders 59 and 69 as shown in the figures have circular shapes, the slider may have various other shapes. It may also be configured that the sliders 59 and 96 are not arranged at all.

### [Description of the symbols]

1 Video playback system
2 Video playback device
21 Control unit
211 Video playback unit
212 Playback video selection unit
213 Operation section display control unit
22 Video playback device-storage unit
221 Program
222 Playback video data
23 Input unit
24 Communication unit
25 Display unit
3 Server
31 Control unit
32 Server storage unit
321 Video data
51 Display screen
52 Video playback screen image
53 First operation section (seek bar)
54 Whole contents playback button
55 Thumbnails
56 First video data (whole video contents)
63 Second operation section (seek bar)
66 Second video data (partial video contents)

## Claims

1. A video playback device comprising:
a video playback unit for enabling selective playback of first video data or second video data that are part of the first video data on a display unit;
a playback video selection unit for allowing a user to select playback of the first or second video data; and
an operation section display control unit to display on the display control unit
a first operation section that indicates a playing position of the first video data and allows specification of the playing position thereof when playback of the first video data has been selected, or
a second operation section that indicates a playing position of the second video data and allows specification of the playing position thereof when playback of the second video data has been selected;
wherein a second duration of time between a playback start time and a playback end time of the second operation section is set shorter than a first duration of time between a playback start time and a playback end time of the first operation section, and a second operation unit that is set as a duration of time specified by a second physical length of the second operation section ranging from a reference time point of the second operation section to a time of the playing position of the second video data is set shorter than a first operation unit that is set as a duration of time specified by a first physical length of the first operation section ranging from a reference time point of the first operation section to a time of the playing position of the first video data in order to allow the playing position to be specified in a finely tuned manner, provided that the first physical length of the first operation section is identical to the second physical length of the second operation section.

2. The video playback device according to claim 1, wherein thumbnails are displayed on the display unit as a playback video selection unit for a user to select playback of the second video data.

3. A video playback method comprising:
a playback video accepting step to provide a playback video selection unit for allowing a user to select playback of first video data or second video data that are part of the first video data, and then to accept a selection of the video data to be played back on a display unit; and
an operation section displaying step to display on the display unit
a first operation section that indicates a playing position of the first video data and allows specification of the playing position thereof when playback of the first video data has been selected, or
a second operation section that indicates a playing position of the second video data and allows specification of the playing position thereof when playback of the second video data has been selected;
wherein a second duration of time between a playback start time and a playback end time of the second operation section is set shorter than a first duration of time between a playback start time and a playback end time of the first operation section, and a second operation unit that is set as a duration of time specified by a second physical length of the second operation section ranging from a reference time point of the second operation section to a time of the playing position of the second video data is set shorter than a first operation unit that is set as a duration of time specified by a first physical length of the first operation section ranging from a reference time point of the first operation section to a time of the playing position of the first video data in order to allow the playing position to be specified in a finely tuned manner, provided that the first physical length of the first operation section is identical to the second physical length of the second operation section.

4. The video playback method according to claim 3, wherein thumbnails are displayed on the display unit as a playback video selection unit for a user to select playback of the second video data.
